# EUROPÄISCHE PATENTANMELDUNG

(11) **EP 4 248 730 A2**
(43) Veröffentlichungstag der Anmeldung: **27.09.2023**
(21) Anmeldenummer: 23153421.5
(22) Anmeldetag: 26.01.2023
(51) Int. Cl.: A01D 57/04

(54) **VORSATZGERÄT, VERFAHREN ZUR STEUERUNG EINES VORSATZGERÄTES SOWIE MÄHDRESCHER**

(30) Priorität: 24.03.2022 DE 102022107015
(71) Anmelder: CLAAS Selbstfahrende Erntemaschinen GmbH, 33428 Harsewinkel (DE)
(72) Erfinder: Baumgarten, Joachim, 48361 Beelen (DE); Neitemeier, Dennis, 59510 Lippetal (DE); Schwaer, Christian, 48231 Warendorf (DE); Bormann, Bastian, 33334 Gütersloh (DE); Wilken, Andreas, 49143 Bissendorf (DE); Irmer, Daniel, 33442 Herzebock-Clarholz (DE); Spiekermann, Sebastian, 48346 Ostbevern (DE)
(74) Vertreter: CLAAS Gruppe

(57) **Zusammenfassung**

Die vorliegende Erfindung betrifft ein Vorsatzgerät (2) mit einer Haspel (15), wobei die Haspel (15) zumindest zwei Haspelsegmente (15a, 15b, ..., 15n) aufweist, welche an Haspeltragarmen (26a, 26i) angelenkt sind, wobei an dem Vorsatzgerät (2) Aktoren (31, 32) angeordnet sind, welche dazu eingerichtet sind, die Haspelsegmente (15a, 15b, ..., 15n) in vertikaler und horizontaler Richtung (VR, HR) zu verstellen, wobei dem Vorsatzgerät (2) zur Ansteuerung der Aktoren (31, 32) eine Steuereinheit (11) zugeordnet ist, wobei dem Vorsatzgerät (2) zumindest eine Sensoreinrichtung (12) zugeordnet ist, die zur Generierung von Messsignalen (33) zur Bestimmung einer Bestandshöhe (HB) und/oder einer Bestandsdichte (BD) eines im Vorfeld (VF) des Vorsatzgerätes (2) befindlichen Erntegutbestands (14) eingerichtet ist, wobei die Steuereinheit (11) dazu eingerichtet ist, die Messsignale (33) zu empfangen und auszuwerten, um in Abhängigkeit von aus den Messsignalen (33) bestimmten Bestandshöhenwerten und/oder Bestandsdichtewerten die Aktoren (31, 32) zur Ausführung einer voneinander unabhängigen Positionsänderung der Haspeltragarme (26a, 26i) automatisch anzusteuern.

## Beschreibung

Die vorliegende Erfindung betrifft ein Vorsatzgerät gemäß dem Oberbegriff des Anspruches 1. Weiterhin hat die vorliegende Erfindung ein Verfahren zur Steuerung eines Vorsatzgerätes gemäß dem Oberbegriff des Anspruches 16 sowie einen Mähdrescher gemäß dem Anspruch 18 zum Gegenstand.

Bei dem in Rede stehenden Vorsatzgerät handelt es sich um jedwedes Vorsatzgerät, welches zum Schneiden und Aufnehmen von Erntegut eingerichtet ist. Ein solches Vorsatzgerät umfasst eine Haspel, welche sich im Wesentlichen über die gesamte Breite des Vorsatzgerätes erstreckt. Die Haspel weist zumindest zwei Haspelsegmente auf, welche an Haspeltragarmen angeordnet sind. Die Haspelsegmente sind durch an dem Vorsatzgerät angeordnete Aktoren in vertikaler und horizontaler Richtung verstellbar. Zur Ansteuerung der Aktoren ist dem Vorsatzgerät eine Steuereinheit zugeordnet.

Im Allgemeinen werden die Haspelsegmente in vertikaler und horizontaler Richtung synchron eingestellt. Dies wird mittels hydraulischer Geber-Nehmerzylinder als Aktoren realisiert. Ein Bediener stellt nur die Höhe und den horizontalen Abstand zum Messerbalken des Vorsatzgerätes ein, damit das Erntegut, beispielsweise Getreide, gleichmäßig mit kontinuierlichen Gutfluss in das Vorsatzgerät gelangt. Wird die Haspel zu hoch eingestellt, so dass die Haspelzinken das Erntegut, insbesondere Ähren, nicht mehr berühren, kann es infolge fehlender Führung im Vorsatzgerät zum Gutstau kommen. Dies hat einen ungleichmäßigen Gutfluss mit teilweise hohen Belastungsspitzen zur Folge, was hohe Erntegutverluste und stärkeren Verschleiß der Arbeitsorgane und der Antriebe eines Mähdreschers, welcher das Vorsatzgerät trägt, nach sich zieht. Wird die Haspel hingegen zu tief eingestellt, so dass sich Zinkenträger unter dem Ährenhorizont befinden, können sich Getreidehalme mit den Ähren über die Zinkenträger hängen, werden mit diesen über die Haspel gefördert und gelangen vor dem Messerbalken kopfüber auf das Feld. Da diese Ähren meist unterhalb der Schnitthöhe des Messerbalkens liegen, werden diese Ähren nicht erneut aufgenommen und sind verloren.

In vergleichbarer Weise verhält es sich mit einer nicht optimalen horizontalen Einstellung der Haspel. Ist der horizontale Abstand der Haspel zu weit vor dem Messerbalken gewählt, so kann das Erntegut nicht genügend geführt werden und es kommt in der Schneidwerksmulde eines als Schneckenschneidwerk ausgeführten Vorsatzgerätes oder auf den Förderbändern eines als Bandschneidwerk ausgeführten Vorsatzgerätes zu einem ungleichmäßigen Gutfluss mit den bekannten Folgen. Ein zu kurz gewählter horizontaler Abstand der Haspel zum Messerbalken kann das aufgenommene Erntegut vor den Förderorganen zusammenpressen. Dies kann, insbesondere beispielsweise bei Raps, zu einer Mitnahme von Erntegut durch die Haspel führen, verbunden mit den bekannten Folgen.

Aus der EP 1 933 340 B1 ist ein als Bandschneidwerk ausgeführtes Vorsatzgerät der eingangs genannten Art bekannt. Das Bandschneidwerk weist einen Mittenabschnitt sowie zwei Seitenabschnitte auf, welche jeweils um eine horizontal verlaufende Achse gegenüber dem Mittenabschnitt in vertikaler Richtung auslenkbar sind, um einer Änderung der Bodenkontur folgen zu können. Eine Haspel des Bandschneidwerkes ist in zwei Haspelsegmente unterteilt, welche von zwei äußeren, synchron bewegten Haspeltragarmen und einem inneren Haspeltragarm getragen werden. Die beiden Haspelsegmente sind an ihren einander zugewandten Enden an dem inneren Haspeltragarm angelenkt. Um bei einer vertikalen Auslenkung der Seitenabschnitte zu gewährleisten, dass am jeweiligen Haspelsegment angeordnete Zinken nicht mit dem Messerbalken kollidieren, ist vorgesehen, dass der innere Haspeltragarm unabhängig von den beiden äußeren Haspeltragarmen beweglich ist.

Aus der EP 3 841 866 A1 ist ein ebenfalls als Bandschneidwerk ausgeführtes Vorsatzgerät der eingangs genannten Art bekannt. Das Bandschneidwerk weist einen Mittenabschnitt sowie zwei Seitenabschnitte auf, welche jeweils um eine horizontal verlaufende Achse gegenüber dem Mittenabschnitt in vertikaler Richtung auslenkbar sind, um einer Änderung der Bodenkontur folgen zu können. Eine Haspel des Bandschneidwerkes ist in drei Haspelsegmente unterteilt, welche von zwei äußeren Haspeltragarmen und zwei inneren Haspeltragarmen getragen werden. Die beiden äußeren Haspelsegmente sind an ihren einander zugewandten Enden an den inneren Haspeltragarmen angelenkt. Gemäß der EP 3 841 866 A1 ist vorgesehen, die Haspelsegmente unabhängig voneinander zu verstellen.

In der Praxis kommt es wiederkehrend zu Umgebungs- und Umweltbedingungen, welche Probleme beim Mähen und Aufnehmen durch das Vorsatzgerät verursachen können. So führen ungünstige Witterungsbedingungen wie Starkwind und hohe Feuchtigkeitsgrade beim Erntegut zum Knickfall der Halme. Es entsteht Lagergetreide, d.h. dass die Getreidepflanze umgeknickt ist und flach auf dem Boden liegt. Hier besteht bei nicht optimaler Haspeleinstellung die Gefahr sehr hoher Kornverluste, da ganze Ähren nicht in das Vorsatzgerät gelangen, sondern einfach überfahren werden. In einer solchen Situation muss die Haspel horizontal vor den Messerbalken gestellt werden und in vertikaler Richtung mit einem möglichst geringen Abstand zum Boden eingestellt werden, um Kornverluste zu minimieren. Zusätzliche Einflüsse können sich dabei durch ein ungleichmäßiges Wachstum ergeben, was dazu führen kann, dass sich innerhalb der Arbeitsbreite des Vorsatzgerätes Erntegut befindet, dass sich durch eine unterschiedliche Bestandshöhe auszeichnet. Lagergetreide und/oder unterschiedliche Bestandshöhen können kleinräumig auftreten bzw. wechseln. Dies führt bei Schneidwerken großer Arbeitsbreite, d.h. einer Arbeitsbreite größer als 10 m, dazu, dass eine Bedienerperson mit der Anpassung der Einstellung an sich, insbesondere kurzfristig, ändernde Erntebedingungen überlastet ist bzw. eine nur unzureichende Einstellungsanpassung der Haspelsegmente vornimmt, so dass die Haspel Überwurf mit Kornverlusten verursacht und/oder der Gutfluss nicht optimal ist.

Ausgehend vom vorstehend genannten Stand der Technik liegt der Erfindung die Aufgabe zugrunde, ein Vorsatzgerät sowie ein Verfahren zur Steuerung des Vorsatzgerätes weiterzubilden, welche sich durch eine verbesserte Anpassung der Haspeleinstellung an kleinräumige Änderungen im Erntegutbestand auszeichnet.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe durch die technischen Merkmale des nebengeordneten Anspruchs 16. Die hierauf jeweils folgenden abhängigen Ansprüche geben jeweils vorteilhafte Weiterbildungen der Erfindung wieder.

Gemäß dem Anspruch 1 wird ein Vorsatzgerät mit einer Haspel vorgeschlagen, wobei die Haspel zumindest zwei Haspelsegmente aufweist, welche an Haspeltragarmen angelenkt sind, wobei an dem Vorsatzgerät Aktoren angeordnet sind, welche dazu eingerichtet sind, die Haspelsegmente in vertikaler und horizontaler Richtung zu verstellen, wobei dem Vorsatzgerät zur Ansteuerung der Aktoren eine Steuereinheit zugeordnet ist. Zur Anlenkung der Haspelsegmente an den Haspeltragarmen sind Drehgelenke vorgesehen.

Erfindungsgemäß ist vorgesehen, dass dem Vorsatzgerät zumindest eine Sensoreinrichtung zugeordnet ist, die zur Generierung von Messsignalen zur Bestimmung einer Bestandshöhe und/oder einer Bestandsdichte eines im Vorfeld des Vorsatzgerätes befindlichen Erntegutbestands eingerichtet ist, wobei die Steuereinheit dazu eingerichtet ist, die Messsignale zu empfangen und auszuwerten, um in Abhängigkeit von aus den Messsignalen bestimmten Bestandshöhenwerten und/oder Bestandsdichtewerten die Aktoren zur Ausführung einer voneinander unabhängigen Positionsänderung der Haspeltragarme automatisch anzusteuern.

Der vorschlagsgemäßen Lösung liegt zunächst einmal die grundsätzliche Erkenntnis zu Grunde, dass eine individuelle Einstellung von horizontaler Position und vertikaler Position der Haspelsegmente eine notwendige Voraussetzung für die Vermeidung von am Vorsatzgerät selbst auftretenden Kornverlusten ist. Das Detektieren der Bestandshöhe und/oder der Bestandsdichte des im Vorfeld des Vorsatzgerätes befindlichen Erntegutbestands hat den Vorteil, dass auf kleinräumige Änderungen besser und effizienter reagiert werden kann, um eine optimierte Einstellung der einzelnen Haspelsegmente durch die voneinander unabhängige Einstellung der Haspeltragarme zu erreichen. Dadurch lässt sich der auftretende Erntegutverlust reduzieren. Zudem kann durch die optimierte Einstellung der einzelnen Haspelsegmente ein höherer Durchsatz bei gleichbleibenden oder geringeren Erntegutverlusten erreicht werden. Zudem kann eine Verbesserung des Gutflusses im Vorsatzgerät, insbesondere in schwierigen Erntesituationen, im Besonderen beim Auftreten von Lagergetreide, erreicht werden. Die automatische Ansteuerung der jeweiligen Aktoren zur Ausführung einer voneinander unabhängigen Positionsänderung der Haspeltragarme in horizontaler und/oder vertikaler Richtung entlastet die Bedienperson von den notwendigen Einstellaufgaben, insbesondere bei schwierigen Erntesituationen. Die zumindest eine Sensoreinrichtung stellt die Messsignale als Eingangsgrößen zur analytischen Bestimmung von Bestandshöhenwerten und/oder Bestandsdichtewerten durch die Steuereinheit bereit.

Insbesondere kann zur Detektion der die Erntebedingungen charakterisierenden Bestandshöhe und/oder Bestandsdichte im Vorfeld des Vorsatzgerätes vorgesehen sein, wobei die zumindest eine Sensoreinrichtung als LIDAR-System, als Kamerasystem, als Radarsystem und/oder als Ultraschallsystem ausgeführt sein kann. Es kann vorgesehen sein, unterschiedlich ausgeführte Sensoreinrichtung miteinander zu kombinieren, um die Genauigkeit der Bestimmung der Bestandshöhenwerte und/oder der Bestandsdichtewerte zu verbessern, wodurch auch die Ansteuerung der jeweiligen Aktoren verbessert wird.

Bevorzugt kann die Steuereinheit dazu eingerichtet sein, einen durch die zumindest eine Sensoreinrichtung im Vorfeld des Vorsatzgerätes detektierten Bestandstreifen in mehrere Erfassungssegmente aufzuteilen, wobei jeweils zumindest ein Erfassungssegment einem einzelnen Haspelsegment zugeordnet ist. Die mehreren Erfassungssegmente decken dabei zumindest die Arbeitsbreite des Vorsatzgerätes ab. Zusätzlich kann jeweils ein weiteres Erfassungssegment einem Bereich seitlich neben dem Vorsatzgerät zugeordnet sein. Das beidseitige Zuordnen jeweils eines zusätzlichen Erfassungssegmentes seitlich neben dem Vorsatzgerät kann vorgesehen sein, wenn durch die zumindest eine Sensoreinrichtung zusätzlich das Vorhandensein einer Bestandskante detektiert werden soll, was dem Führen des Vorsatzgerätes respektive des das Vorsatzgerät tragenden Mähdreschers als Orientierungshilfe dient.

Weiterhin kann die Steuereinheit dazu eingerichtet sein, die Erfassungssegmente in einzelne Flächensektoren zu unterteilen, um die Bestandshöhenwerte und/oder Bestandsdichtewerte aus den jeweiligen Messsignalen für die Bestandshöhe und/oder die Bestandsdichte jedes einzelnen Flächensektors zu bestimmen. Die Unterteilung der Erfassungssegmente in einzelne Flächensektoren führt im Ergebnis zu einer höheren Auflösung bei der Bestimmung der Bestandshöhenwerte und/oder der Bestandsdichtewerte, wodurch die Ansteuerung der einzelnen Haspelsegmente präziser erfolgen kann und besser an kleinräumige Veränderungen im Erntegutbestand angepasst ist.

Insbesondere kann die Steuereinheit dazu eingerichtet sein, die Sensoreinrichtung anzusteuern, den im Vorfeld zu detektierenden Bestandstreifen in einem vorbestimmten Abstand beabstandet zur Vorderkante respektive Messerbalken des Vorsatzgerät zu erfassen, wobei die Steuereinheit dazu eingerichtet ist, den Abstand zwischen der Vorderkante und dem Beginn des zu detektierenden Bestandstreifens zumindest in Abhängigkeit von der Reaktionszeit der Aktoren zu bestimmen. Hierdurch wird erreicht, dass ein ausreichender zeitlicher Vorlauf für die Auswertung und Generierung von Steuerbefehlen durch die Steuereinheit besteht, um die Aktoren zur voneinander unabhängigen Positionsänderung der Haspeltragarme automatisch anzusteuern.

Bevorzugt können die einzelnen Flächensektoren im Wesentlichen rechteckförmig ausgebildet sein und Kantenlängen im Bereich von 0,5 m bis zu 2 m aufweisen. Die Größe der Flächensektoren in Bewegungsrichtung des Vorsatzgerätes und quer dazu sollten so gewählt sein, dass ein Optimum zwischen einer repräsentativen Messung und einer geeigneten Höhenbewegung und/oder Horizontalbewegung der Haspel besteht.

Anhand der bestimmten Bestandshöhenwerte und/oder der Bestandsdichtewerte in den einzelnen Flächensektoren können die Höhenverstellung und die Horizontalverstellung der einzelnen Haspelsegmente berechnet werden, um eine an die bestehenden Erntebedingungen optimal angepasste unabhängige Positionsänderung der Haspeltragarme automatisch ansteuern zu können.

Gemäß einer bevorzugten Weiterbildung kann die Steuereinheit zur Durchführung einer Regressionsanalyse eingerichtet sein, um in Abhängigkeit vom Analyseergebnis Steuerbefehle zur Ansteuerung der Aktoren für eine Höhenverstellung und/oder eine Horizontalverstellung des jeweiligen Haspeltragarmes zu generieren. Die Berechnung kann mittels der Regressionsanalyse der Bestandshöhenwerte und/oder der Bestandsdichtewerte in den einzelnen Flächensektoren über die Breite des Vorsatzgerätes erfolgen. Die Höhenverstellung und/oder die Horizontalverstellung der Haspelsegmente durch die voneinander unabhängige Ansteuerung der Haspeltragarme kann dann aus einer bestimmten Regressionskurve für die jeweiligen Ortskoordinaten, über die Arbeitsbreite des Vorsatzgerätes gesehen, nach Verrechnung der Geometriedaten der Haspelsegmente, wie Haspelradius, Zinkenlänge, etc., ermittelt werden.

Hierbei kann die Steuereinheit dazu eingerichtet sein, die lineare oder nichtlineare Regression, insbesondere die Quantilsregression, als Regressionsverfahren zu verwenden. Alternativ sind auch andere Analyseverfahren denkbar, wie Mittelwertbildung oder iterative Näherungsverfahren.

Gemäß einer bevorzugten Weiterbildung kann die Anzahl der verstellbaren Haspeltragarme der um den Wert 1 erhöhten Anzahl der Haspelsegmente entsprechen, wobei zwei Haspeltragarme an den Außenseiten des Vorsatzgerätes und der dritte oder jeder weitere Haspeltragarm zwischen den benachbarten Haspelsegmenten am Vorsatzgerät angeordnet sind. Mit einer steigenden Anzahl an Haspelsegmenten kann die Anpassbarkeit an die bestehenden Erntebedingungen und demzufolge die Funktionserfüllung verbessert werden.

Hierbei kann das Vorsatzgerät nur einen Antrieb zur Erzeugung einer Rotationsbewegung aller Haspelsegmente aufweisen, die durch eine gemeinsame Haspelwelle miteinander trieblich verbunden sind.

Alternativ kann die Anzahl der verstellbaren Haspeltragarme der doppelten Anzahl der Haspelsegmente entsprechen, wobei jedes Haspelsegment jeweils zwischen zwei verstellbaren Haspeltragarmen angeordnet ist. Hierbei kann jedes Haspelsegment einen separaten Antrieb zur Erzeugung einer Rotationsbewegung des jeweiligen Haspelsegmentes aufweisen. Weiterhin können die Haspeltragarme des jeweiligen Haspelsegments nur paarweise verstellbar sein. So kann gemäß dieser Weiterbildung bereits mit einer Ausführung der Haspel, welche zwei Haspelsegmente und vier, paarweise unabhängig verstellbare, Haspeltragarme aufweist, ein hoher Grad an Funktionserfüllung erreicht werden. Mit einer zunehmenden, insbesondere ungeraden, Anzahl der Haspelsegmente lässt sich eine weitere Zunahme des Funktionserfüllungsgrades erreichen, da mit der steigenden Anzahl der Haspelsegmente die Flexibilität zunimmt, um auf kleinräumige Veränderungen im Erntegutbestand, d.h. insbesondere hinsichtlich Bestandsdichte und/oder Bestandshöhe, reagieren zu können.

Gemäß einer weiteren Alternative kann jedes Haspelsegment in zumindest drei Abschnitte unterteilt sein, wobei jeder Abschnitt einen veränderlichen Außendurchmesser der Anordnung von auf Tragsternen in Umfangsrichtung verteilt angeordneten Zinkenträgern aufweist. Eine abschnittsweise Anpassung des Außendurchmessers des jeweiligen Haspelsegmentes respektive der Zinkenträger mit daran angeordneten Zinken ermöglicht eine flexiblere Anpassung an sich ändernde Erntebedingungen, insbesondere im Annahmebereich eines einzelnen Haspelsegmentes.

Hierbei kann jedes Haspelsegment mehrere auf einer Haspelwelle mit Abstand zueinander angeordnete, in axialer Richtung kegelstumpfförmig ausgeführte Tragsterne sowie sich über die Breite des jeweiligen Abschnitts des Haspelsegmentes erstreckende, durch Gelenke miteinander verbundene Zinkenträger aufweisen, wobei die Zinkenträger auf den kegelstumpfförmigen ausgeführten Tragsternen in im Wesentlichen sternförmig angeordneten Führungsbahnen in, bezogen auf die Haspelwelle, radialer Richtung verstellbar geführt sind. Die sternförmig angeordneten Führungsbahnen auf dem jeweiligen Tragstern verlaufen achsparallel zur Haspelwelle. Durch eine axiale Verschiebung eines Tragsterns oder mehrerer Tragsterne entlang der Haspelwelle lässt sich der Außendurchmesser jedes einzelnen Abschnitts des Haspelsegmentes verändern, um eine verbesserte Anpassung an sich ändernde Erntebedingungen zu erreichen.

Weiterhin wird die eingangs gestellte Aufgabe durch ein Verfahren mit den Merkmalen des nebengeordneten Anspruches 16 gelöst.

Gemäß dem nebengeordneten Anspruch 16 wird ein Verfahren zur Steuerung eines Vorsatzgerätes mit einer Haspel vorgeschlagen, wobei die Haspel zumindest zwei Haspelsegmente aufweist, welche an Haspeltragarmen angelenkt sind, wobei die Haspelsegmente durch an dem Vorsatzgerät angeordnete Aktoren in vertikaler und horizontaler Richtung verstellt werden, wobei die Aktoren durch eine dem Vorsatzgerät zugeordnete Steuereinheit angesteuert werden, wobei dem Vorsatzgerät zumindest eine Sensoreinrichtung zugeordnet ist, durch die Messsignale zur Bestimmung einer Bestandshöhe und/oder einer Bestandsdichte eines im Vorfeld des Vorsatzgerätes befindlichen Erntegutbestands generiert werden, wobei die Messsignale von der Steuereinheit empfangen und ausgewertet werden, um in Abhängigkeit von aus den Messsignalen bestimmten Bestandshöhenwerten und/oder Bestandsdichtewerten die Aktoren zur Ausführung einer voneinander unabhängige Positionsänderung der Haspeltragarme automatisch anzusteuern.

Bevorzugt kann vorgesehen sein, dass ein parallel zur Arbeitsbreite des Vorsatzgerätes verlaufender Bestandstreifen des durch die zumindest eine Sensoreinrichtung detektierten Vorfeldes des Vorsatzgerätes in mehrere Erfassungssegmente aufgeteilt wird, wobei jeweils zumindest zwei Erfassungssegmente einem einzelnen Haspelsegment zugeordnet werden und jeweils ein Erfassungssegment einem Bereich seitlich neben dem Vorsatzgerät zugeordnet wird, wobei die Erfassungssegmente in einzelne Flächensektoren untergliedert werden, um die Bestandshöhenwerten und/oder Bestandsdichtewerten aus den jeweiligen Messsignalen für die Bestandshöhe und/oder die Bestandsdicht jedes einzelnen Flächensektors zu bestimmen. Die Größe der Flächensektoren kann automatisch vorgegeben werden, beispielsweise in Abhängigkeit von der Arbeitsbreite des Vorsatzgerätes, oder durch eine manuelle Eingabe durch eine Bedienperson.

Das Verfahren zur Steuerung des Vorsatzgerätes kann alle im Zusammenhang mit dem erfindungsgemäßen Vorsatzgerät beschriebenen Merkmale gemäß den Ansprüchen 2 bis 15 einzeln oder in Kombination aufweisen.

Des Weiteren wird die eingangs gestellte Aufgabe gemäß dem Anspruch 18 durch einen Mähdrescher mit einem Vorsatzgerät gelöst, wobei das Vorsatzgerät eine Haspel umfasst, wobei die Haspel zumindest zwei Haspelsegmente aufweist, welche an Haspeltragarmen angeordnet sind, wobei die Haspelsegmente durch an dem Vorsatzgerät angeordnete Aktoren in vertikaler und horizontaler Richtung verstellbar sind, wobei dem Vorsatzgerät zur Ansteuerung der Aktoren eine Steuereinheit zugeordnet ist, dadurch gekennzeichnet, dass das Vorsatzgerät nach einem der vorangehenden Ansprüche 1 bis 15 ausgeführt und die Steuereinheit zur Durchführung eines Verfahrens nach einem der Ansprüche 16 oder 17 eingerichtet ist. Ein wesentlicher Effekt besteht in einem höheren Durchsatz des Mähdreschers bei gleichbleibenden oder geringeren Kornverlusten. Weiterhin kann eine höhere Qualität des bearbeiten Erntegutes durch eine gleichmäßigere und kontinuierlichere Zuführung des Erntegutes in den Mähdrescher erreicht werden. Dies führt auch zu einer besseren und gleichmäßigeren Häckselgutverteilung und damit zu weniger Aufwand in der Bodenbearbeitung sowie zu besseren Startbedingungen für die Folgefrucht. Ein weiterer Vorteil ist eine geringere mechanische Belastung der das Erntegut verarbeitenden Arbeitsaggregate und damit eine höhere Standzeit und weniger Reparaturen.

Die vorliegende Erfindung wird nachstehend anhand von in den Zeichnungen dargestellten Ausführungsbeispielen näher erläutert.

Es zeigen:
- Fig. 1: eine schematische Darstellung eines Mähdreschers in Seitenansicht;
- Fig. 2: schematisch eine perspektivische Ansicht eines Vorsatzgerätes;
- Fig. 3: schematisch den Aufbau einer dem Vorsatzgerät zugeordneten Steuereinheit;
- Fig. 4: schematisch eine Darstellung des Vorsatzgerätes in Frontansicht;
- Fig. 5: eine schematische und stark vereinfachte Darstellung einer ersten Ausführungsform des erfindungsgemäßen Vorsatzgerätes gemäß Fig. 4;
- Fig. 6: eine schematische Darstellung einer Weiterbildung des erfindungsgemäßen Vorsatzgerätes gemäß Fig. 5;
- Fig. 7: eine schematische Darstellung einer Weiterbildung des erfindungsgemäßen Vorsatzgerätes gemäß Fig. 6;
- Fig. 8: eine schematische und stark vereinfachte Darstellung einer zweiten Ausführungsform des erfindungsgemäßen Vorsatzgerätes in Draufsicht;
- Fig. 9: eine schematische Darstellung einer Weiterbildung des erfindungsgemäßen Vorsatzgerätes gemäß Fig. 8;
- Fig. 10: eine schematische und stark vereinfachte Darstellung einer dritten Ausführungsform des erfindungsgemäßen Vorsatzgerätes in Draufsicht;
- Fig. 11: schematisch eine Schnittansicht eines Tragsterns des Vorsatzgerätes gemäß Fig. 10 von der Seite;
- Fig. 12: schematisch eine Schnittansicht des Tragsterns gemäß Fig. 11 von vorne; und
- Fig. 13: schematisch eine Ansicht eines Haspelsegments gemäß Fig. 10.

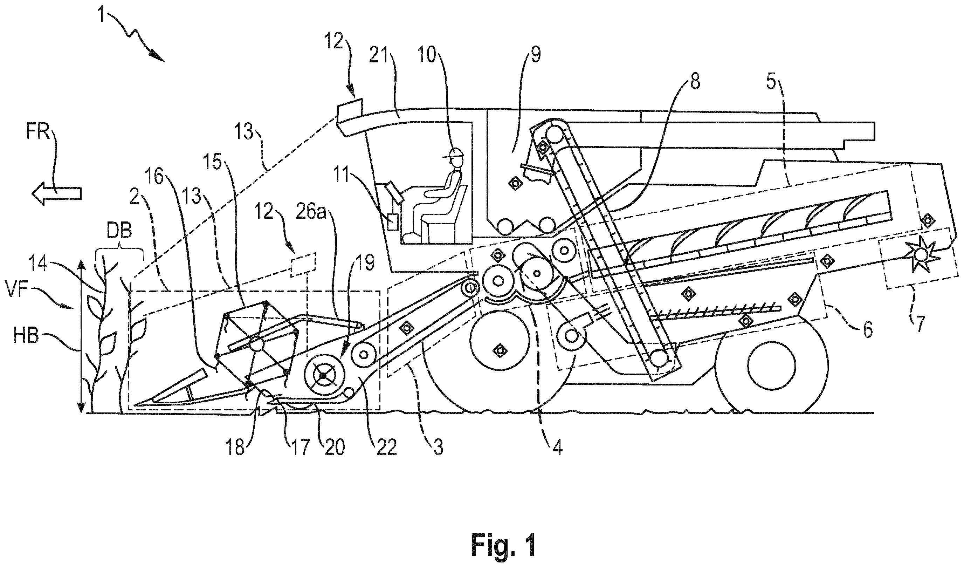

In Fig. 1 ist eine schematische Darstellung eines Mähdreschers 1 in Seitenansicht gezeigt. Der Mähdrescher 1 weist ein als Vorsatzgerät 2 ausgebildetes Schneidwerk zum Schneiden und Aufnehmen von Erntegut 14 auf. Das Vorsatzgerät 2 ist vorzugsweise austauschbar gegen ein anderes Vorsatzgerät 2, so dass die Erntemaschine 1 auf das Ernten unterschiedlicher Fruchtarten angepasst werden kann. Unter dem Begriff Erntegut 14 ist dabei das gesamte vom Feldbestand durch das Vorsatzgerät 2 aufgenommene Material, d.h. Korn und Nichtkornbestandteile, zu verstehen. Wie in Fig. 1 zu erkennen ist, wird ein Feldbestand durch das Vorsatzgerät 2 gemäht und das aufgenommene Erntegut 14 einem Schrägförderer 3 zugeführt. Vom Schrägförderer 3 wird das vom Vorsatzgerät 2 aufgenommene Erntegut 14 einem Dreschwerk 4 zum Dreschen zugeführt. Dem Dreschwerk 4 ist eine Abscheideanordnung 5 prozesstechnisch nachgelagert. Der dem Dreschwerk 4 zugeführte Erntegutstrom wird also im Anschluss - ohne das bereits hier gewonnene Korngut - der Abscheideanordnung 5 zugeführt. In der Abscheideanordnung 5 wird das Erntegut 14 mit dem in ihm verbliebenen Kornanteil so bewegt, dass auch das verbliebene Korngut möglichst aus dem Stroh und dem sonstigen Erntegut 14 herausgetrennt wird. Das im Dreschwerk 4 und der Abscheideanordnung 5 gewonnene Korngut wird dann einer Reinigungsanordnung 6 zugeführt. In der Reinigungsanordnung 6, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut mittels einer Transportanordnung 8, z. B. einen Kornelevator, in einen Korntank 9. Das ausgedroschene Stroh - also das verbliebene Erntegut 14 in der Abscheideanordnung 5 - kann von dem Mähdrescher 1 abgelegt werden, z. B. als Schwad entlang einer Fahrspur. Alternativ kann das verbliebene Erntegut 14 durch eine Verteilanordnung 7 auf dem Feld flächig ausgebracht werden.

Das als Schneidwerk ausgeführte Vorsatzgerät 2 weist eine quer zur Fahrtrichtung FR des Mähdreschers 1 verlaufende Haspel 15 auf, die durch an dieser angeordnete Haspelzinken 16 bereits auf das noch ungeschnittene Erntegut 14 einwirkt. Die Haspel 15 hat in erster Linie die Aufgabe, das Erntegut 14 einem Messerbalken 17, der ein bewegliches Messer 18 aufweist, zuzuführen. Das Messer 18 oszilliert mit einer Schnittfrequenz, so dass das Erntegut 14 geschnitten wird und auf einen Schneidtisch 20 fällt, an dessen Vorderseite sich der Messerbalken 17 befindet. Anschließend wird das Erntegut 14, ggf. unter weiterer Einwirkung durch die Haspel 15, mittels einer Querförderschnecke 19 in seitlicher gefördert dem Schrägförderer 3 zugeführt. Mit 26a ist einer von zwei an den Außenseiten des Vorsatzgerätes 2 angeordneten Haspeltragarmen bezeichnet, die nachfolgend auch als äußere Haspeltragarme 26a bezeichnet werden.

In einer Kabine 21 des Mähdrescher 1 befindet sich eine Bedienerperson 10, welche den Mähdrescher 1 bedient. Weiterhin ist eine dem Vorsatzgerät 2 zugeordnete Steuereinheit 11 zur Ansteuerung des Vorsatzgerätes 2 vorgesehen. Im dargestellten Ausführungsbeispiel ist die Steuereinheit 11 am bzw. im Mähdrescher 1 angeordnet. Alternativ kann die Steuereinheit 11 auch an dem Vorsatzgerät 2 angeordnet bzw. in dieses integriert sein.

Dem Vorsatzgerät 2 ist zumindest eine Sensoreinrichtung 12 zugeordnet, welche zur Erfassung eines Vorfeldes VF, d.h. dem vor dem Vorsatzgerät 2 befindlichen Bereich mit zu erntendem Erntegut 14, eingerichtet ist. Hierzu kann die zumindest eine Sensoreinrichtung 12 am Dach der Kabine 21 angeordnet sein. Hierbei kommt im einfachsten Fall eine im Wesentlichen mittige Anordnung der Sensoreinrichtung 12 in Betracht. Denkbar ist auch eine Anordnung zweier Sensoreinrichtungen 12 auf dem Dach der Kabine 21, wobei die Anordnung der beiden Sensoreinrichtungen 12 so gewählt ist, dass diese einen einander abschnittsweise überlappenden Erfassungsbereich aufweisen. Alternativ oder zusätzlich kann die zumindest eine Sensoreinrichtung 12 am Vorsatzgerät 2 angeordnet sein, was durch die strichlinierte Darstellung der Sensoreinrichtung 12 angedeutet ist. Hierbei kann insbesondere eine seitliche Anordnung der zumindest einen Sensoreinrichtung 12 am Tragrahmen 22 des Vorsatzgerätes 2 vorgesehen sein. Die zumindest eine Sensoreinrichtung 12 sendet einen oder mehrere Sensorstrahlen 13 auf das im Vorfeld VF des Vorsatzgerätes 2 befindliche Erntegut 3.

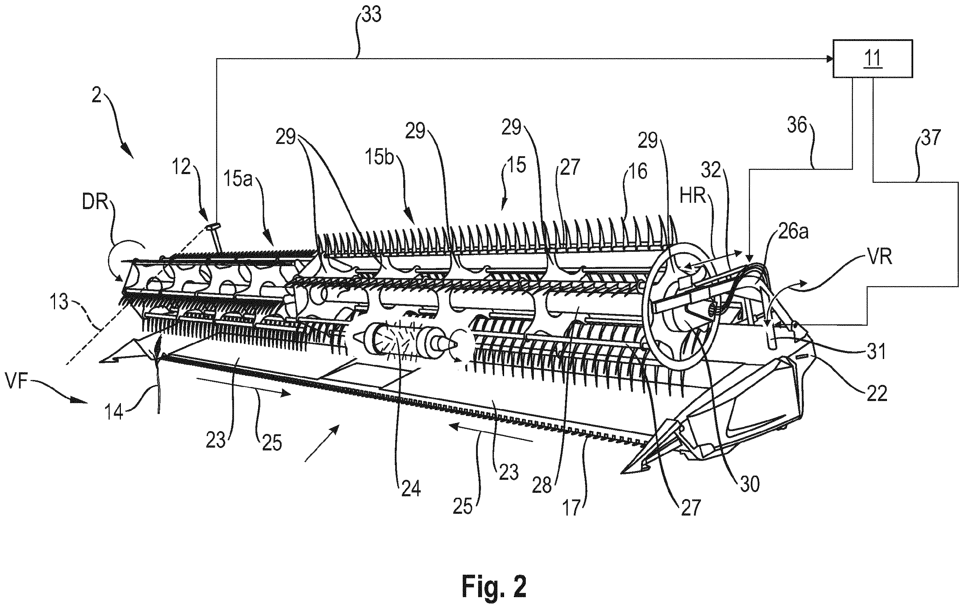

In Fig. 2 ist schematisch eine perspektivische Ansicht des Vorsatzgerätes 2 dargestellt. Bei dem dargestellten Vorsatzgerät 2 handelt es sich um ein sogenanntes Bandschneidwerk oder Draper. Im Unterschied zu dem in Fig. 1 dargestellten Vorsatzgerät 2 wird das geschnittene und aufgenommene Erntegut 14 von einander gegenüberliegenden Förderbändern 23 jeweils in seitlicher Richtung - Förderrichtung 25 - einer mittig angeordneten Einzugswalze 24 zugeführt. Im Übrigen sind die wesentlichen Bauteile und Komponenten hinsichtlich ihrer Funktionalität gleich, so dass für diese die bereits in Fig. 1 verwendeten Bezugszeichen beibehalten werden. Die zumindest eine Sensoreinrichtung 12 ist hierbei außenseitig am Vorsatzgerät 2 angeordnet. Bevorzugt sind an beiden Außenseiten des Vorsatzgerätes 2 Sensoreinrichtungen 12 angeordnet.

Die Haspel 15 ist in zumindest zwei Haspelsegmente 15a, 15b unterteilt. Die Haspelsegmente 15a, 15b sind an Haspeltragarmen 26a, 26i angelenkt, von denen nur einer in der Ansicht gemäß Fig. 2 sichtbar dargestellt ist. Mit dem Bezugszeichen 26i ist der zwischen den beiden Haspelsegmenten 15a, 15b angeordnete Haspeltragarm bezeichnet, welcher nachfolgend auch als innerer Haspeltragarm 26i bezeichnet wird. Die beiden Haspelsegmente 15a, 15b sind mit dem inneren Haspeltragarm 26i gelenkig verbunden. Die Haspelzinken 16 sind jeweils auf Zinkenträgern 27 angeordnet, welche sich über die Breite des jeweiligen Haspelsegmentes 15a, 15b erstrecken. Jedes Haspelsegment 15a, 15b weist mehrere auf einer Haspelwelle 28 mit Abstand zueinander angeordnete Tragsterne 29. Über den Umfang der Tragsterne 29 sind im Wesentlichen gleichmäßig verteilt die Zinkenträger 27 angeordnet. Zum rotierenden Antreiben der Haspelsegmente 15a, 15b ist zumindest einer Haspelwelle 28 ein Antrieb 30 zugeordnet, welche die Haspelsegmente 15a, 15b in Drehrichtung DR bewegt. Bei nur einem Antrieb 30 sind die Haspelwellen 28 hierzu untereinander gelenkig miteinander verbunden.

Die Haspel 15 bzw. die Haspelsegmente 15a, 15b sind sowohl in vertikaler Richtung VR als auch in horizontaler Richtung HR verstellbar, um die Position der Haspel 15 an unterschiedliche Erntebedingungen anpassen zu können. Hierzu sind an dem Vorsatzgerät 2 Aktoren 31, 32, insbesondere elektrisch oder hydraulisch betreibbare Linearaktoren, angeordnet, welche durch die dem Vorsatzgerät 2 zugeordnete Steuereinheit 11 angesteuert werden. Eine Verstellung der Haspel 15 in horizontaler Richtung HR bedeutet eine Längsverschiebung in Fahrtrichtung FR durch eine Ansteuerung des zumindest einen Aktors 32, um die einzelnen Haspelsegmente 15a, 15b bezüglich des Messerbalkens 17 in horizontaler Richtung HR optimal zu positionieren. Eine Verstellung der Haspel 15 bzw. der Haspelsegmente 15a, 15b in vertikaler Richtung VR bedeutet eine Abstandsänderung im Wesentlichen senkrecht zum Messerbalken 17 durch eine Ansteuerung des zumindest einen Aktors 31. An jedem Haspeltragarm 26a, 26i ist jeweils ein Paar Aktoren 31, 32 angeordnet, um den jeweiligen Haspeltragarm 26a, 26i durch eine entsprechende Ansteuerung durch die Steuereinheit 11 in vertikaler Richtung VR und/oder in horizontaler Richtung HR verstellen zu können.

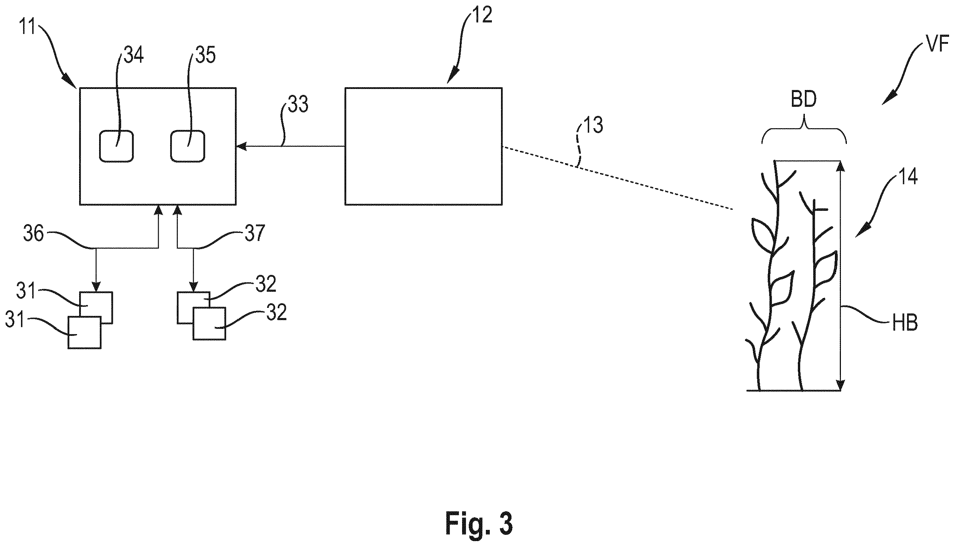

Fig. 3 zeigt eine schematische Darstellung des Aufbaus der dem Vorsatzgerät 2 zugeordneten Steuereinheit 11. Die zumindest eine dem Vorsatzgerät 2 zugeordnete Sensoreinrichtung 12 ist zur Generierung von Messsignalen 33 zur Bestimmung einer Bestandshöhe HB und/oder einer Bestandsdichte DB des im Vorfeld VF des Vorsatzgerätes 2 befindlichen Erntegutbestands 14 eingerichtet. Die Steuereinheit 12 ist dazu eingerichtet, die von der zumindest einen Sensoreinrichtung 12 generierten Messsignale 33 zu empfangen und auszuwerten, um in Abhängigkeit von aus den Messsignalen 33 bestimmten Bestandshöhenwerten und/oder Bestandsdichtewerten die Aktoren 31, 32 zur Ausführung einer voneinander unabhängigen Positionsänderung der Haspeltragarme 26a, 26i automatisch anzusteuern. Hierzu weist die Steuereinheit 11 eine Speichereinheit 34 zum Hinterlegen von Daten und eine Recheneinheit 35 zur Verarbeitung der in der Speichereinheit 34 hinterlegten Daten auf. Zur Ansteuerung der Aktoren 31, 32 werden von der Steuereinheit 11 generierte Steuerbefehle 36, 37 an diese übertragen. Die Steuerbefehle 36 basieren auf den Bestandshöhenwerten und die Steuerbefehle 37 auf den Bestandsdichtewerten.

Die zumindest eine dem Vorsatzgerät 2 zugeordnete Sensoreinrichtung 12 kann als LIDAR-System, als Kamerasystem, als Radarsystem und/oder als Ultraschallsystem ausgeführt sein. Denkbar sind auch Kombinationen der vorstehend aufgelisteten Systeme, um die Genauigkeit bei der Bestimmung der Bestandshöhe HB und der Bestandsdichte DB im Vorfeld VF des Vorsatzgerätes 2 zu verbessern.

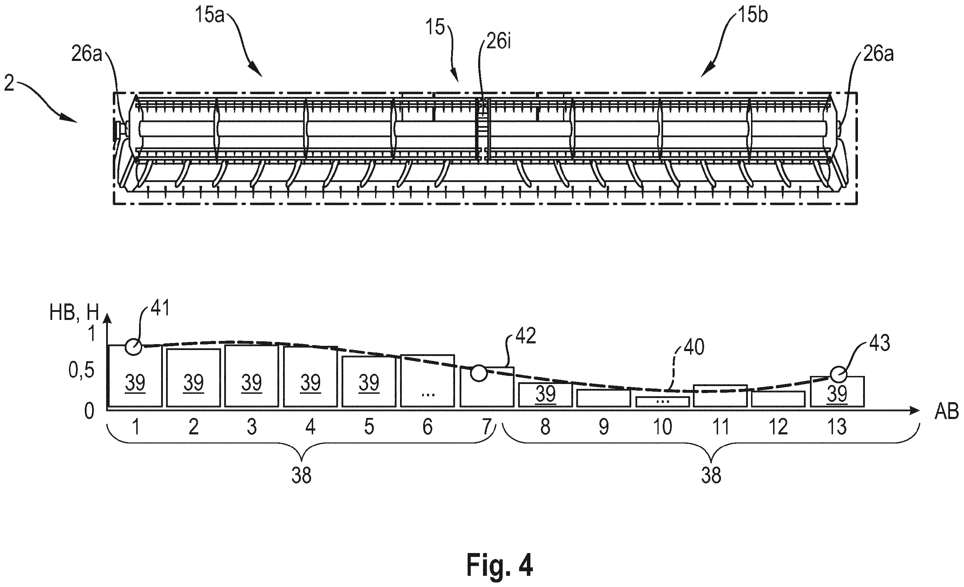

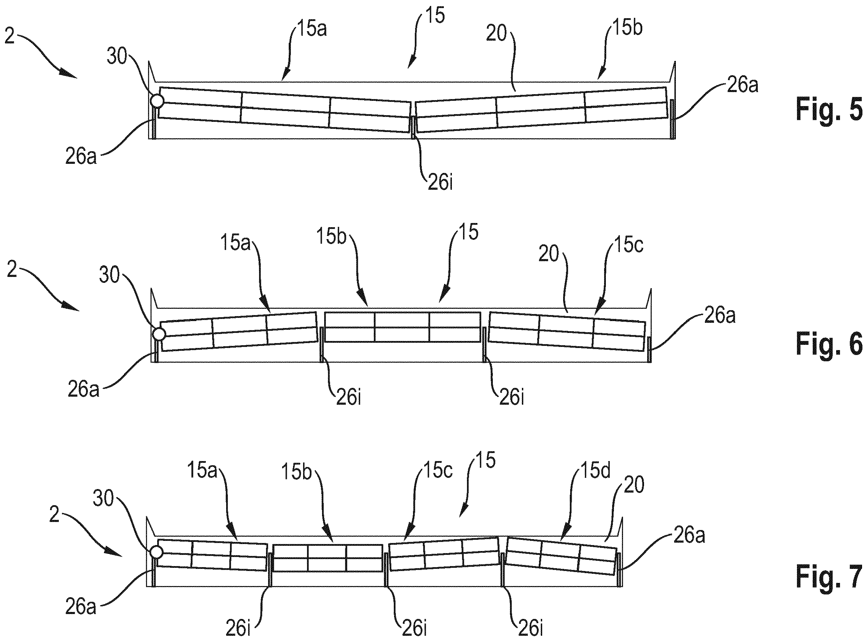

Fig. 4 zeigt schematisch eine Darstellung des Vorsatzgerätes 2 in Frontansicht. Die Steuereinheit 11 ist dazu eingerichtet, einen durch die zumindest eine Sensoreinrichtung 12 im Vorfeld VF des Vorsatzgerätes 2 detektierten Bestandstreifen in mehrere Erfassungssegmente 38 aufzuteilen, wobei jeweils zumindest ein Erfassungssegment 38 einem einzelnen Haspelsegment 15a, 15b zugeordnet ist. Das in Fig. 4 dargestellte Vorsatzgerät 2 weist drei Haspeltragarme 26a, 26i auf. Jeweils ein Haspeltragarm 26a ist außenseitig am Tragrahmen 22 des Vorsatzgerätes 2 angeordnet, ein dritter Haspeltragarm 26i ist mittig zwischen den beiden Haspelsegmenten 15a, 15b angeordnet. Ausführungen mit mehr als drei Haspeltragarmen 26a, 26i und mehr als zwei Haspelsegmenten 15a, 15b werden weiter unten anhand der Fig. 5 bis 7 erläutert.

Unterhalb der beispielhaften Darstellung des Vorsatzgerätes 2 sind die der Anzahl der vorhandenen Haspelsegmenten 15a, 15b entsprechenden Erfassungssegmente 38 dargestellt, in welche der Bestandstreifen unterteilt wird. Die Steuereinheit 11 ist bevorzugt dazu eingerichtet, die zumindest eine Sensoreinrichtung 12 anzusteuern, den im Vorfeld VF zu detektierenden Bestandstreifen in einem vorbestimmten Abstand beabstandet zur Vorderkante respektive des Messerbalkens 17 des Vorsatzgerätes 2 zu erfassen. Weiter kann die Steuereinheit 11 dazu eingerichtet sein, den Abstand zwischen der Vorderkante und dem Beginn des zu detektierenden Bestandstreifens zumindest in Abhängigkeit von der Reaktionszeit der Aktoren 31, 32, d.h. dem Zeitraum, den die Aktoren 31, 32 benötigen, eine Verstellung zumindest eines Haspeltragarmes 26a, 26i durchzuführen, zu bestimmen. Auf diese Weise kann eine vorausschauende Anpassung der Position der Haspelsegmente 15a, 15b an sich ändernde Erntebedingungen gewährleistet werden.

Die Steuereinheit 11 ist weiter dazu eingerichtet, die Erfassungssegmente 38 in einzelne Flächensektoren 39 zu unterteilen, um die Bestandshöhenwerten und/oder Bestandsdichtewerten aus den jeweiligen Messsignalen 33 für die Bestandshöhe HB und/oder die Bestandsdichte DB jedes einzelnen Flächensektors 39 zu bestimmen. Bevorzugt können die einzelnen Flächensektoren 39 im Wesentlichen rechteckförmig ausgebildet sein und Kantenlängen im Bereich von 0,5 m bis zu 2 m aufweisen. Um an die jeweils vorherrschenden Bedingungen im Erntegutbestand angepasste Steuerbefehle 36, 37 zu generieren, kann die Steuereinheit 11 zur Durchführung eines Regressionsverfahrens eingerichtet sein, um in Abhängigkeit vom Ergebnis des durchgeführten Regressionsverfahrens die Steuerbefehle 36, 37 zur Ansteuerung der Aktoren 31, 32 für eine Höhenverstellung und/oder eine Horizontalverstellung des jeweiligen Haspeltragarmes 26a, 26i zu generieren.

Ein Verlauf einer anhand von Messsignalen 33 für die Bestandshöhe HB eines jeden einzelnen Flächensektors 39 bestimmten Regressionskurve 40 ist in der Fig. 4 dargestellt. Die Flächensektoren 39 verteilen sich über eine Arbeitsbreite AB des Vorsatzgerätes 2. Eine voneinander unabhängig einzustellende Höhenposition 41, 42, 43 des jeweiligen Haspeltragarmes 26a, 26i wird entsprechend dem Verlauf Regressionskurve 40 eingestellt. So können einzustellende Höhenwerte H für die Höhenverstellung der Haspelsegmente 15a, 15b durch die voneinander unabhängige Ansteuerung der Haspeltragarme 26a, 26i kann dann aus der bestimmten Regressionskurve 40 für die jeweiligen Ortskoordinaten, über die Arbeitsbreite AB des Vorsatzgerätes 2 gesehen, nach Verrechnung der Geometriedaten der Haspelsegmente 15a, 15b, wie Haspelradius, Zinkenlänge, etc., ermittelt werden.

Weiterhin ist die Berechnung der einzustellenden Höhenwerte H der Haspelabschnitte 15a, 15b bzw. deren Tragarme 26a, 26i beispielsweise über das 90% Quantil möglich. Das 90% Quantil der Bestandshöhe HB gibt an, bei welcher Höhe 90% der gemessenen Bestandshöhenwerte unter dieser liegen. Für die Berechnung der Höheneinstellung der Haspeltragarme 26 werden über die Arbeitsbreite AB des Vorsatzgerätes 2 mehrere Breitenbereiche gebildet. Die Anzahl der Breitenbereiche ergibt sich aus der Anzahl der Haspeltragarme 26a, 26i. Für jeden Breitenbereich wird nun das 90% Quantil der Bestandshöhe HB gebildet und dem jeweiligen Tragarm 26a, 26i der Haspel 15 zugeordnet. Nach Verrechnung der Geometriedaten der Haspelsegmente 15a, 15b kann dann der jeweilige Haspeltragarm 26a, 26i auf die erforderliche Höhe H eingestellt werden.

Eine ähnliche Vorgehensweise der Berechnung über Regression oder 90% Quantil wird auch für die Ermittlung der Horizontalverstellung des jeweiligen Haspeltragarmes 26a, 26i der Haspelsegmente 15a, 15b verwendet. Dabei wird ein einzustellender horizontaler Abstand von der Schnittkante bzw. der Vorderkante des Messerbalkens 17 bestimmt. In diesem Fall ist jedoch nicht die Bestandshöhe HB des Erntegutes 14 die Einflussgröße, sondern die Bestandsdichte DB. Für die Horizontalverstellung der Haspelsegmente 15a, 15b wird als Bezugsgröße die Schnittkante bzw. Vorderkante des Messerbalkens 17 genutzt, so dass eine in einer vorgeschalteten Automatisierungsstufe ermittelte optimale Schneidtischlänge automatisch mit in die Berechnung einfließt.

Da gerade bei breiten Vorsatzgeräten 2, insbesondere mit Arbeitsbreiten AB größer 10 m, die Erntegutmenge in der Mitte des Vorsatzgerätes 2 sehr viel größer ist als in den seitlichen Bereichen, kann die Haspelhorizontalverstellung der Haspelsegmente 15a, 15b vorzugsweise so eingestellt werden, dass sich eine Lambda-Form oder Dreieckform der Positionierung der Haspelsegmente 15a, 15b einstellt. Dabei sind die äußeren Seiten der Haspelsegmente 15a, 15b relativ näher an der Rückwand des Vorsatzgerätes 2 als die Mitte(n) der der Haspelsegmente 15a, 15b, um den höheren Erntegutströmen in der Mitte genügend Raum zu geben, um hier einen Überwurf und damit verbunden einen Erntegutverlust zu vermeiden und gleichzeitig an den Seiten einen störungsfreien Gutfluss zu gewährleisten.

Fig. 5 zeigt eine schematische und stark vereinfachte Darstellung der ersten Ausführungsform des erfindungsgemäßen Vorsatzgerätes 2 gemäß Fig. 4 in Draufsicht. Wie weiter oben bereits ausgeführt wurde, ist die in Fig. 5 dargestellte Haspel 15 in zwei Haspelsegmente 15a, 15b unterteilt. Die zwei Haspeltragarme 26a sind an den Außenseiten des Vorsatzgerätes 2 und der dritte, hier der mittlere, Haspeltragarm 26i ist zwischen den benachbarten beiden Haspelsegmenten 15a, 15b am Vorsatzgerät 2 angeordnet. Weiter ist in Fig. 5 eine Horizontalverstellung der beiden Haspelsegmente 15a, 15b angedeutet, welche sich aus einer abweichenden Ansteuerung des inneren Haspeltragarmes 26i gegenüber den beiden äußeren Haspeltragarmen 26a ergibt. Die Darstellung zeigt beispielhaft eine Ansteuerung der Haspeltragarme 26a, 26i, aufgrund der sich eine Trichterform der Positionierung der Haspelsegmente 15a, 15b einstellt. Der horizontale Abstand der äußeren Bereiche der Haspelsegmente 15a, 15b zur Rückwand des Vorsatzgerätes 2 wird durch die Ansteuerung der äußeren Haspeltragarme 26a verringert, während der mittlere oder innere Tragarm 26i weiter ausgefahren ist, so dass die benachbarten inneren Bereiche der Haspelsegmente 15a, 15b einen geringeren Abstand zur Rückwand des Vorsatzgerätes 2 aufweisen als die äußeren Bereiche.

In Fig. 6 ist eine schematische Darstellung einer Weiterbildung des erfindungsgemäßen Vorsatzgerätes 2 gemäß Fig. 5 in Draufsicht gezeigt. Die Haspel 15 ist in drei Haspelsegmente 15a, 15b, 15c unterteilt. Die Anzahl der unabhängig angesteuerten Haspeltragarme 26a, 26i gemäß dieser Ausführungsform erhöht sich entsprechend auf vier. Neben den beiden äußeren Haspeltragarme 26a sind nunmehr zwei innere Haspeltragarme 26i vorgesehen. Entsprechend der Anzahl der Haspelsegmente 15a, 15b, 15c werden die im Vorfeld VF des Vorsatzgerätes 2 detektierten Bestandstreifen in zumindest drei Erfassungssegmente 38 aufgeteilt. Diese werden wiederum in einzelne Flächensektoren 39 unterteilt, um die Bestandshöhenwerten und/oder Bestandsdichtewerten aus den jeweiligen Messsignalen 33 für die Bestandshöhe HB und/oder die Bestandsdichte DB jedes einzelnen Flächensektors 39 zu bestimmen, wie weiter oben ausgeführt.

Fig. 7 zeigt eine schematische Darstellung einer Weiterbildung des erfindungsgemäßen Vorsatzgerätes 2 gemäß Fig. 6 in Draufsicht gezeigt. Die Haspel 15 ist in vier Haspelsegmente 15a, 15b, 15c, 15d unterteilt. Die Anzahl der unabhängig angesteuerten Haspeltragarme 26a, 26i gemäß dieser Ausführungsform erhöht sich entsprechend auf fünf. Die voneinander unabhängige Ansteuerung der Haspeltragarme 26a, 26i respektive der zugehörigen Aktoren 31, 32 ermöglicht beispielsweise eine wellenförmige Positionierung der Haspelsegmente 15a, 15b, 15c, 15d.

Den Weiterbildungen gemäß den Fig. 6 und 7 ist gemeinsam, dass die Anpassung an die bestimmten Bestandshöhenwerte und/oder Bestandsdichtewerte mit zunehmender Anzahl der Haspelsegmente 15a, 15b, 15c, 15d verbessert wird. Zudem ist nur ein Antrieb 30 erforderlich, um die Haspel 15 als Ganzes rotierend anzutreiben.

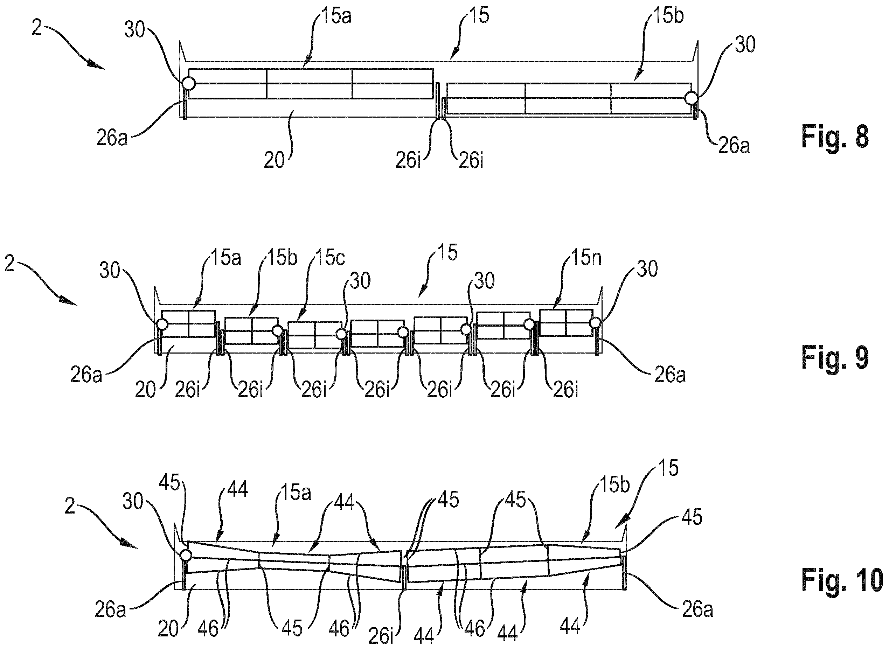

In Fig. 8 ist eine schematische und stark vereinfachte Darstellung einer zweiten Ausführungsform des erfindungsgemäßen Vorsatzgerätes 2 in Draufsicht gezeigt. Gemäß dieser Ausführungsform entspricht die Anzahl der verstellbaren Haspeltragarme 26a, 26i der doppelten Anzahl der Haspelsegmente 15a, 15b, wobei jedes Haspelsegment 15a, 15b jeweils zwischen zwei verstellbaren Haspeltragarmen 26a, 26i angeordnet ist. Weiterhin weist jedes Haspelsegment 15a, 15b einen separaten Antrieb 30 auf. Die Aktoren 31, 32 der Haspeltragarme 26a, 26i eines jeden Haspelsegmentes 15, 15b werden hierbei jeweils paarweise unabhängig durch die Steuereinheit 11 angesteuert, um eine die Haspelsegmente 15a, 15b in vertikaler Richtung VR und horizontaler Richtung HR zu verstellen. Gegenüber der Ausführungsform gemäß Fig. 5 weist diese zweite Ausführungsform den Vorteil auf, dass eine verbesserte Verstellung zur Anpassung an kleinräumige Änderungen im Erntegutbestand ermöglicht wird.

Fig. 9 zeigt eine schematische Darstellung einer Weiterbildung des erfindungsgemäßen Vorsatzgerätes 2 gemäß Fig. 8 in Draufsicht. Die Haspel 15 ist gemäß dieser Weiterbildung in sieben Haspelsegmente 15a, 15b, 15c, ..., 15n unterteilt, was lediglich beispielhaft zu verstehen ist. Die Anzahl der paarweise unabhängig angesteuerten Haspeltragarme 26a, 26i gemäß dieser Ausführungsform erhöht sich entsprechend auf vierzehn. Die feinere Unterteilung der Haspel 15 durch die erhöhte Anzahl an Haspelsegmenten 15a, 15b, 15c, ..., 15n ermöglicht eine weitere Verbesserung der Verstellung zur Anpassung an kleinräumige Änderungen im Erntegutbestand. Der Anzahl der Haspelsegmente 15a, 15b, 15c, ..., 15n entsprechend sind hierfür sieben Antriebe 30 vorgesehen, um jedes Haspelsegment 15a, 15b, 15c, ..., 15n anzutreiben. Dies gilt entsprechend für die Anzahl der Aktoren 31, 32 zur Verstellung der Haspeltragarme 26a, 26i in vertikaler Richtung VR und horizontaler Richtung HR.

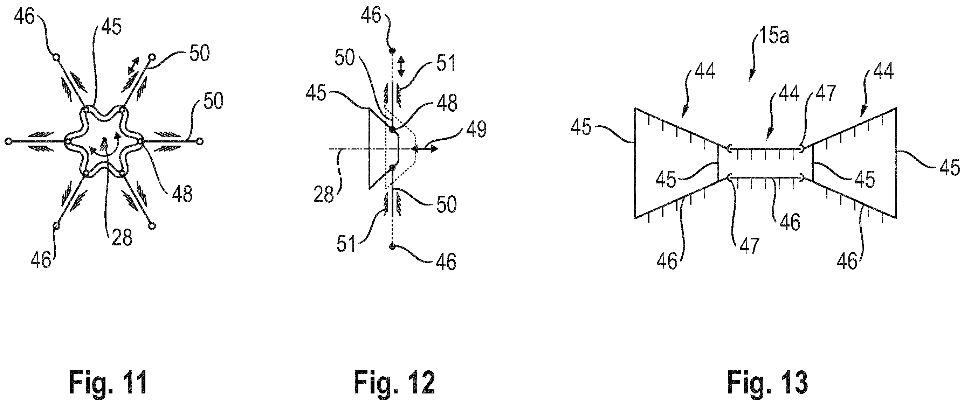

In Fig. 10 ist eine schematische und stark vereinfachte Darstellung einer dritten Ausführungsform des erfindungsgemäßen Vorsatzgerätes 2 in Draufsicht gezeigt. Die Haspel 15 ist in zwei Haspelsegmente 15a, 15b unterteilt, welche durch drei voneinander unabhängig ansteuerbare Haspeltragarme 26a, 26i verstellbar sind, was der weiter oben bereits beschriebenen Ausführungsform gemäß der Fig. 5 entspricht. Weiterhin weist diese Ausführungsform nur einen Antrieb 30 auf, um die Haspel 15 anzutreiben. Abweichend ist gemäß dieser dritten Ausführungsform jedes Haspelsegment 15a, 15b in zumindest drei Abschnitte 44 unterteilt, wobei jeder Abschnitt 44 einen veränderlichen Außendurchmesser der Anordnung von auf Tragsternen 45 in Umfangsrichtung verteilt angeordneten Zinkenträgern 46 aufweist. Die Zinkenträger 46 sind untereinander gelenkig verbunden, wie in Fig. 12 schematisch dargestellt.

Mit Bezug auf die Fig. 11 bis 13 werden der Aufbau und die Funktionsweise der Tragsterne 45 näher erläutert. Jedes Haspelsegment 15a, 15b weist mehrere auf der Haspelwelle 28 mit Abstand zueinander angeordnete Tragsterne 45 auf. Die Tragsterne 45 sind, bezogen auf die Haspelwelle 28, in axialer Richtung kegelstumpfförmig ausgeführt, wie aus Fig. 12 ersichtlich. Die sich über die Breite des jeweiligen Abschnitts 44 des Haspelsegmentes 15a, 15b erstreckenden Zinkenträger 46 sind untereinander durch Gelenke 47 verbunden. Dies dient dazu, die an den Zinkenträgern 46 Haspelzinken von einer Seite des Vorsatzgerätes 2 aus durchgängig verstellen zu können. Die Zinkenträger 46 sind in im Wesentlichen sternförmig auf den kegelstumpfförmigen Tragsternen 45 angeordneten Führungsbahnen 48, die sich bezogen auf die Haspelwelle 28 in axialer Richtung erstrecken, in radialer Richtung verstellbar geführt. Wie in Fig. 12 veranschaulicht, sind die Tragsterne 34 axial verschieblich auf der Haspelwelle 28 angeordnet, so dass eine axiale Verschiebung 49 eines einzelnen Tragsterns 45 zu einer Veränderung des Außendurchmessers der Anordnung der Zinkenträger 46 führt. Aufgrund der kegelstumpfförmigen Form der Tragsterne 45 und der in axialer Richtung auf deren Umfang verlaufenden Führungsbahnen 48 werden die Zinkenträger 46 tragenden Arme 50 in radialer Richtung bewegt. Zur Führung der Arme 50 in radialer Richtung sind jeweils Lagerstellen 51 vorgesehen,

**Bezugszeichenliste**

| | | | |
|---|---|---|---|
| 1 | Mähdrescher | 28 | Haspelwelle |
| 2 | Vorsatzgerät | 29 | Tragstern |
| 3 | Schrägförderer | 30 | Antrieb |
| 4 | Dreschwerk | 31 | Aktor |
| 5 | Abscheideanordnung | 32 | Aktor |
| 6 | Reinigungsanordnung | 33 | Messsignal |
| 7 | Verteilanordnung | 34 | Speichereinheit |
| 8 | Transportanordnung | 35 | Recheneinheit |
| 9 | Korntank | 36 | Steuerbefehl |
| 10 | Bedienperson | 37 | Steuerbefehl |
| 11 | Steuereinheit | 38 | Erfassungssegment |
| 12 | Sensoreinrichtung | 39 | Flächensektor |
| 13 | Sensorstrahl | 40 | Regressionskurve |
| 14 | Erntegut | 41 | Höhenposition |
| 15 | Haspel | 42 | Höhenposition |
| 15a | Haspelsegment | 43 | Höhenposition |
| 15b | Haspelsegment | 44 | Abschnitt |
| 15c | Haspelsegment | 45 | Tragstern |
| 15d | Haspelsegment | 46 | Zinkenträger |
| 15n | Haspelsegment | 47 | Gelenk |
| 16 | Haspelzinken | 48 | Führungsbahn |
| 17 | Messerbalken | 49 | Axiale Verschiebung |
| 18 | Messer | 50 | Arm |
| 19 | Querförderschnecke | 51 | Lagerstelle |
| 20 | Schneidtisch | AB | Arbeitsbreite |
| 21 | Kabine | DB | Bestandsdichte |
| 22 | Tragrahmen | DR | Drehrichtung |
| 23 | Förderband | FR | Fahrtrichtung |
| 24 | Einzugswalze | H | Höhenwert |
| 25 | Förderrichtung | HB | Bestandhöhe |
| 26a | Haspeltragarm | HR | Horizontale Richtung |
| 26i | Haspeltragarm | VR | Vertikale Richtung |
| 27 | Zinkenträger | VF | Vorfeld |

## Patentansprüche

1. Vorsatzgerät (2) mit einer Haspel (15), wobei die Haspel (15) zumindest zwei Haspelsegmente (15a, 15b, ..., 15n) aufweist, welche an Haspeltragarmen (26a, 26i) angelenkt sind, wobei an dem Vorsatzgerät (2) Aktoren (31, 32) angeordnet sind, welche dazu eingerichtet sind, die Haspelsegmente (15a, 15b, ..., 15n) in vertikaler Richtung (VR) und horizontaler Richtung (VR) zu verstellen, wobei dem Vorsatzgerät (2) zur Ansteuerung der Aktoren (31, 32) eine Steuereinheit (11) zugeordnet ist, **dadurch gekennzeichnet, dass** dem Vorsatzgerät (2) zumindest eine Sensoreinrichtung (12) zugeordnet ist, die zur Generierung von Messsignalen (33) zur Bestimmung einer Bestandshöhe (HB) und/oder einer Bestandsdichte (DB) eines im Vorfeld (VF) des Vorsatzgerätes (2) befindlichen Erntegutbestands (14) eingerichtet ist, wobei die Steuereinheit (11) dazu eingerichtet ist, die Messsignale (33) zu empfangen und auszuwerten, um in Abhängigkeit von aus den Messsignalen (33) bestimmten Bestandshöhenwerten und/oder Bestandsdichtewerten die Aktoren (31, 32) zur Ausführung einer voneinander unabhängigen Positionsänderung der Haspeltragarme (26a, 26i) automatisch anzusteuern.

2. Vorsatzgerät (2) nach Anspruch 1, **dadurch gekennzeichnet, dass** die zumindest eine Sensoreinrichtung (12) als LIDAR-System, als Kamerasystem, als Radarsystem und/oder als Ultraschallsystem ausgeführt ist.

3. Vorsatzgerät (2) nach Anspruch 1 oder 2, **dadurch gekennzeichnet, dass** die Steuereinheit (11) dazu eingerichtet ist, einen durch die zumindest eine Sensoreinrichtung (12) im Vorfeld (VF) des Vorsatzgerätes (2) detektierten Bestandstreifen in mehrere Erfassungssegmente (39) aufzuteilen, wobei jeweils zumindest ein Erfassungssegment (39) einem einzelnen Haspelsegment (15a, 15b, ..., 15n) zugeordnet ist.

4. Vorsatzgerät (2) nach Anspruch 3, **dadurch gekennzeichnet, dass** die Steuereinheit (11) dazu eingerichtet ist, die Erfassungssegmente (38) in einzelne Flächensektoren (39) zu unterteilen, um die Bestandshöhenwerte und/oder Bestandsdichtewerte aus den jeweiligen Messsignalen (33) für die Bestandshöhe (HB) und/oder die Bestandsdichte (DB) jedes einzelnen Flächensektors (39) zu bestimmen.

5. Vorsatzgerät (2) nach Anspruch 3 oder 4, **dadurch gekennzeichnet, dass** die Steuereinheit (11) dazu eingerichtet ist, die Sensoreinrichtung (12) anzusteuern, den im Vorfeld (VF) zu detektierenden Bestandstreifen in einem vorbestimmten Abstand beabstandet zur Vorderkante des Vorsatzgerät (2) zu erfassen, wobei die Steuereinheit (11) dazu eingerichtet ist, den Abstand zwischen der Vorderkante und dem Beginn des zu detektierenden Bestandstreifens zumindest in Abhängigkeit von der Reaktionszeit der Aktoren (31, 32) zu bestimmen.

6. Vorsatzgerät (2) nach Anspruch 4 oder 5, **dadurch gekennzeichnet, dass** die einzelnen Flächensektoren (39) im Wesentlichen rechteckförmig ausgebildet sind und Kantenlängen im Bereich von 0,5 m bis zu 2 m aufweisen.

7. Vorsatzgerät (2) nach einem der Ansprüche 4 bis 6, **dadurch gekennzeichnet, dass** die Steuereinheit (11) zur Durchführung eines Regressionsverfahrens eingerichtet ist, um in Abhängigkeit vom Analyseergebnis Steuerbefehle (36, 37) zur Ansteuerung der Aktoren (31, 32) für eine Höhenverstellung und/oder eine Horizontalverstellung des jeweiligen Haspeltragarmes (26a, 26i) zu generieren.

8. Vorsatzgerät (2) nach Anspruch 7, **dadurch gekennzeichnet, dass** die Steuereinheit (11) dazu eingerichtet ist, die lineare oder nichtlineare Regression, insbesondere die Quantilsregression, als Regressionsverfahren zu verwenden.

9. Vorsatzgerät (2) nach einem der Ansprüche 1 bis 8, **dadurch gekennzeichnet, dass** die Anzahl der verstellbaren Haspeltragarme (26a, 26i) der um den Wert 1 erhöhten Anzahl der Haspelsegmente (15a, 15b, ..., 15n) entspricht, wobei zwei Haspeltragarme (26a) an den Außenseiten des Vorsatzgerätes (2) und der dritte oder jeder weitere Haspeltragarm (26i) zwischen den benachbarten Haspelsegmenten (15a, 15b, ..., 15n) am Vorsatzgerät (2) angeordnet sind.

10. Vorsatzgerät (2) nach Anspruch 9, **dadurch gekennzeichnet, dass** das Vorsatzgerät (2) nur einen Antrieb (30) zur Erzeugung einer Rotationsbewegung aller Haspelsegmente (15a, 15b, ..., 15n) aufweist, die durch eine gemeinsame Haspelwelle (28) miteinander trieblich verbunden sind.

11. Vorsatzgerät (2) nach einem der Ansprüche 1 bis 8, **dadurch gekennzeichnet, dass** die Anzahl der verstellbaren Haspeltragarme (26a, 26i) der doppelten Anzahl der Haspelsegmente (15a, 15b, ..., 15n) entspricht, wobei jedes Haspelsegment (15a, 15b, ..., 15n) jeweils zwischen zwei verstellbaren Haspeltragarmen (26a, 26i) angeordnet ist.

12. Vorsatzgerät (2) nach Anspruch 11, **dadurch gekennzeichnet, dass** jedes Haspelsegment (15a, 15b, ..., 15n) einen separaten Antrieb (30) zur Erzeugung einer Rotationsbewegung des jeweiligen Haspelsegmentes (15a, 15b, ..., 15n) aufweist.

13. Vorsatzgerät (2) nach Anspruch 11 oder 12, **dadurch gekennzeichnet, dass** die Haspeltragarme (26a, 26i) des jeweiligen Haspelsegments (15a, 15b, ..., 15n) nur paarweise verstellbar sind.

14. Vorsatzgerät (2) nach Anspruch 9, **dadurch gekennzeichnet, dass** jedes Haspelsegment (15a, 15b, ..., 15n) in zumindest drei Abschnitte (44) unterteilt ist, wobei jeder Abschnitt (44) einen veränderlichen Außendurchmesser der Anordnung von auf Tragsternen (45) in Umfangsrichtung verteilt angeordneten Zinkenträgern (46) aufweist.

15. Vorsatzgerät nach Anspruch 14, **dadurch gekennzeichnet, dass** jedes Haspelsegment (15a, 15b, ..., 15n) mehrere auf der Haspelwelle (28) mit Abstand zueinander angeordnete, in axialer Richtung kegelstumpfförmig ausgeführte Tragsterne (45) sowie sich über die Breite des jeweiligen Abschnitts (44) des Haspelsegmentes (15a, 15b, ..., 15n) erstreckende, durch Gelenke (47) miteinander verbundene Zinkenträger (46) aufweist, wobei die Zinkenträger (46) auf den kegelstumpfförmigen ausgeführten Tragsternen (45) in im Wesentlichen sternförmig auf diesen angeordneten Führungsbahnen (48) in, bezogen auf die Haspelwelle (28), radialer Richtung verstellbar geführt sind.

16. Verfahren zur Steuerung eines Vorsatzgerätes (2) mit einer Haspel (15), wobei die Haspel (15) zumindest zwei Haspelsegmente (15a, 15b, ..., 15n) aufweist, welche an Haspeltragarmen (26a, 26i) angelenkt sind, wobei die Haspelsegmente (15a, 15b, ... , 15n) durch an dem Vorsatzgerät (2) angeordnete Aktoren (31, 32) in vertikaler und horizontaler Richtung (VR, HR) verstellt werden, wobei die Aktoren (31, 32) durch eine dem Vorsatzgerät (2) zugeordnete Steuereinheit (11) angesteuert werden, **dadurch gekennzeichnet, dass** dem Vorsatzgerät (2) zumindest eine Sensoreinrichtung (12) zugeordnet ist, durch die Messsignale (33) zur Bestimmung einer Bestandshöhe (HB) und/oder einer Bestandsdichte (DB) eines im Vorfeld (VF) des Vorsatzgerätes (2) befindlichen Erntegutbestands (14) generiert werden, wobei die Messsignale (33) von der Steuereinheit (11) empfangen und ausgewertet werden, um in Abhängigkeit von aus den Messsignalen (33) bestimmten Bestandshöhenwerten und/oder Bestandsdichtewerten die Aktoren (31, 32) zur Ausführung einer voneinander unabhängigen Positionsänderung der Haspeltragarme (26a, 26i) automatisch anzusteuern.

17. Verfahren nach Anspruch 16, **dadurch gekennzeichnet, dass** ein parallel zur Arbeitsbreite (AB) des Vorsatzgerätes (2) verlaufender Bestandstreifen des durch die zumindest eine Sensoreinrichtung (12) detektierten Vorfeldes (VF) des Vorsatzgerätes (2) in mehrere Erfassungssegmente (38) aufgeteilt wird, wobei jeweils zumindest zwei Erfassungssegmente (38) einem einzelnen Haspelsegment (15a, 15b, ..., 15n) zugeordnet werden und jeweils ein Erfassungssegment (38) einem Bereich seitlich neben dem Vorsatzgerät (2) zugeordnet wird, wobei die Erfassungssegmente (38) in einzelne Flächensektoren (39) untergliedert werden, um die Bestandshöhenwerten und/oder Bestandsdichtewerten aus den jeweiligen Messsignalen (33) für die Bestandshöhe (HB) und/oder die Bestandsdichte (DB) jedes einzelnen Flächensektors (39) zu bestimmen.

18. Mähdrescher (1) mit einem Vorsatzgerät (2), wobei das Vorsatzgerät (2) eine Haspel (15) umfasst, wobei die Haspel (15) zumindest zwei Haspelsegmente (15a, 15b, ..., 15n) aufweist, welche an Haspeltragarmen (26a, 26i) angeordnet sind, wobei die Haspelsegmente (15a, 15b, ..., 15n) durch an dem Vorsatzgerät (2) angeordnete Aktoren (31, 32) in vertikaler und horizontaler Richtung (VR, HR) verstellbar sind, wobei dem Vorsatzgerät (2) zur Ansteuerung der Aktoren (31, 32) eine Steuereinheit (11) zugeordnet ist, **dadurch gekennzeichnet, dass** das Vorsatzgerät (2) nach einem der vorangehenden Ansprüche 1 bis 15 ausgeführt und die Steuereinheit (11) zur Durchführung eines Verfahrens nach einem der Ansprüche 16 oder 17 eingerichtet ist.
